# NEUE EUROPÄISCHE PATENTSCHRIFT

(11) **EP 1 731 393 B2**
(45) Veröffentlichungstag und Bekanntmachung des Hinweises auf die Entscheidung über den Einspruch: **27.01.2016**
(45) Hinweis auf die Patenterteilung: 20.03.2013
(21) Anmeldenummer: 06010660.6
(22) Anmeldetag: 24.05.2006
(51) Int. Cl.: B60T 15/04, B60T 17/00

(54) **Luftaufbereitungsanlage und Feststellbremsventilmodul für eine Nutzfahrzeugbremsanlage**
Air treatment system and parking brake module for a brake system of a commercial motor vehicle
Système de traitement d'air et module de frein de stationnement pour un système de freinage d'un véhicule utilitaire

(30) Priorität: 10.06.2005 DE 102005027043
(43) Veröffentlichungstag der Anmeldung: 13.12.2006
(73) Patentinhaber: KNORR-BREMSE Systeme für Nutzfahrzeuge GmbH, 80809 München (DE)
(72) Erfinder: Hilberer, Eduard, 68766 Hockenheim (DE); Széll, Péter, 6342 Drágszél (HU)
(74) Vertreter: Maiwald Patentanwalts GmbH

(56) Entgegenhaltungen:
- EP-A- 0 212 074
- EP-A- 1 464 556
- DE-A1- 10 251 249
- DE-A1- 10 341 723
- DE-B3- 10 314 642

## Beschreibung

Die Erfindung betrifft ein System, umfassend eine Luftaufbereitungsanlage, insbesondere eine elektronisch gesteuerte Luftaufbereitungsanlage, zum Versorgen einer Nutzfahrzeugbremsanlage mit Druckluft, mit einem Gehäuse und mit Anschlüssen, die dazu vorgesehen sind, mit einem Feststellbremsventilmodul verbunden zu werden.

Das System umfasst weiterhin ein Feststellbremsventilmodul zum Beaufschlagen zumindest eines Feststellbremszylinders einer Nutzfahrzeugbremsanlage mit Druckluft, mit einem Gehäuse und mit Anschlüssen, die dazu vorgesehen sind, mit einer Luftaufbereitungsanlage verbunden zu werden.

Eine gattungsgemäße Luftaufbereitungsanlage und ein gattungsgemäßes Feststellbremsventilmodul sind beispielsweise aus der DE 103 41 723 bekannt. Beim Stand der Technik werden die entsprechenden Anschlüsse der Luftaufbereitungsanlage über Pneumatikleitungen mit den entsprechenden Anschlüssen des Feststellbremsventilmoduls verbunden, das an einer geeigneten Stelle beabstandet von der Luftaufbereitungsanlage angeordnet ist. Beispielsweise ist es beim Stand der Technik erforderlich, den in einem dem Feststellbremsventilmodul nachgeschalteten Feststellbremszylinder herrschenden Druck über eine vergleichsweise lange Messleitung zu der Luftaufbereitungsanlage zurückzuführen, um ihn dort zu sensieren. Weiterhin ist es beim Stand der Technik erforderlich, einen Versorgungsdruckanschluss des Feststellbremsventilmoduls über eine Versorgungsleitung, die einen entsprechend großen Querschnitt aufweisen muss, mit einem Anschluss der Luftaufbereitungsanlage zu verbinden, der über diese mit einem Druckluftvorrat in Verbindung gebracht werden kann.

Die US 2004/0145237 A1 offenbart ein System mit einer Luftaufbereitungsanlage und einem damit elektrisch und pneumatisch verbundenen Feststellbremsventilmodul, welches als 2/2-Wegeventil ausgebildet ist und eine Belüftungs- und Sperrstellung aufweist.

Die WO 2006/045 489 A1 offenbart ein modulares System mit einer Luftaufbereitungsanlage und einem damit elektrisch und pneumatisch verbundenen Feststellbremsventilmodul und weiteren Modulen, die per Zuganker über korrespondierende Gehäuseseiten aneinander befestigt sind.

Der Erfindung liegt die Aufgabe zugrunde, das gattungsgemäße System mit Luftaufbereitungsanlage und Feststellbremsventilmodul derart weiterzubilden, dass die erforderliche Anzahl beziehungsweise die erforderliche Länge der Verbindungsleitungen reduziert wird.

Diese Aufgabe wird durch die Merkmale von Anspruch 1 gelöst.

Vorteilhafte Ausführungsformen und Weiterbildungen der Erfindung sind in den abhängigen Ansprüchen angegeben. Die Erfindung schließt die technische Lehre ein, dass die Feststellbremsventilmodul-Befestigungseinrichtung (118) durch einen ersten Flansch (120) gebildet ist, und dass die Luftaufbereitungsanlagen-Befestigungseinrichtung (218) durch einen zweiten Flansch (220) gebildet ist, und dass in dem ersten Flansch (120) Luftkanäle (122, 124, 126) mit einem freien Ende ausgebildet sind, das jeweils einen der Anschlüsse (112, 114, 116) bildet, und dass in dem zweiten Flansch (220) Luftkanäle (222, 224, 226) mit einem freien Ende ausgebildet sind, das jeweils einen der Anschlüsse (212, 214, 216) bildet, wobei ein erster Kanal (124, 224) ein Relaisventil (228) mit Druckluft versorgt und ein zweiter Kanal (122, 222) den vom Relaisventil (228) angesteuerten und einem Bremszylinder (320) zur Verfügung gestellten Druck über die Flansche (120, 220) einem Drucksensor (128) zuführt, welcher in der elektronischen Luftaufbereitungsanlage (100) untergebracht ist.

Von Vorteil ist bei der erfindungsgemäßen Luftaufbereitungsanlage, dass die Anschlüsse im Bereich der speziellen Feststellbremsventilmodul-Befestigungseinrichtung angeordnet ist. Die Anordnung der Anschlüsse ist dabei in besonders vorteilhafter Weise derart, dass sich bei der Befestigung eines Feststellbremsventilmoduls eine zumindest weitgehend automatische Verbindung mit den entsprechenden Anschlüssen des Feststellbremsventilmoduls ergibt.

Insbesondere im vorstehend erläuterten Zusammenhang wird es für die erfindungsgemäße Luftaufbereitungsanlage als vorteilhaft erachtet, dass die Feststellbremsventilmodul-Befestigungseinrichtung einen Flansch umfasst. Der Begriff "Flansch" soll im Zusammenhang mit der vorliegenden Erfindung breit ausgelegt werden und alle Anschlusselemente umfassen, die dazu geeignet sind, mit entsprechenden Anschlusselementen eines Feststellbremsventilmoduls zusammenzuwirken. Bevorzugt wird jedoch eine in einer Ebene liegende Kontaktfläche.

In diesem Zusammenhang sieht eine besonders bevorzugte Weiterbildung der erfindungsgemäßen Luftaufbereitungsanlage vor, dass in dem Flansch zumindest ein Luftkanal mit einem freien Ende ausgebildet ist, das einen der Anschlüsse bildet. Eine besonders effiziente Lösung wird erzielt, wenn alle erforderlichen Anschlüsse durch entsprechende freie Enden von in dem Flansch vorgesehenen Luftkanälen gebildet werden. Dies gilt insbesondere, wenn das an der Feststellbremsventilmodul-Befestigungseinrichtung zu befestigende Feststellbremsventilmodul über Anschlüsse verfügt, die von der Geometrie her korrespondierend angeordnet sind. In diesem Fall kann auf separate Verbindungsleitungen vollständig verzichtet werden. Gegebenenfalls können im Bereich der jeweiligen Anschlüsse Dichtungseinrichtungen vorgesehen werden, die separat ausgebildet oder der Luftaufbereitungsanlage und/oder dem Feststellbremsventilmodul zugeordnet sein können. Beispielsweise können zu diesem Zweck geeignete Beschichtungen verwendet werden.

Insbesondere wenn auf separate Verbindungsleitungen vollständig verzichtet werden soll, wird es für die erfindungsgemäße Luftaufbereitungsanlage bevorzugt, dass die Anschlüsse einen ersten Anschluss umfassen, der mit einem in dem Gehäuse untergebrachten Drucksensor in Verbindung steht. Über den ersten Anschluss kann somit beispielsweise der in einem Feststellbremszylinder herrschende Druck zur Erfassung durch den Drucksensor zugeführt werden. Dies ist insbesondere vorteilhaft, wenn das Feststellbremsventilmodul über einen entsprechenden Anschluss verfügt, der mit einem Bereich in dem Feststellbremsventilmodul in Verbindung steht, in dem ein Druck herrscht, der mit dem Druck in dem Feststellbremszylinder zumindest in einer bekannten Korrelation steht. In diesem Fall kann auf eine Messleitung vollständig verzichtet werden.

Weiterhin wird es für die erfindungsgemäße Luftaufbereitungsanlage bevorzugt, dass die Anschlüsse einen zweiten Anschluss umfassen, der über die (elektronische) Luftaufbereitungsanlage mit einem Druckluftvorrat in Verbindung gebracht werden kann. Diese Lösung ist vorteilhaft, weil das an der Feststellbremsventilmodul-Befestigungseinrichtung zu befestigende oder befestigte Feststellbremsventilmodul dann einen Druckluftzufuhranschluss aufweisen kann, der ohne Zwischenschaltung einer Versorgungsleitung mit dem zweiten Anschluss verbunden werden beziehungsweise sein kann.

In ähnlicher Weise wird es für die erfindungsgemäße Luftaufbereitungsanlage als vorteilhaft erachtet, dass die Anschlüsse einen dritten Anschluss umfassen, der über die elektronische Luftaufbereitungsanlage mit einer Drucksenke in Verbindung gebracht werden kann. Ein derartiger dritter Anschluss ist beispielsweise vorteilhaft, wenn die Luftaufbereitungsanlage einen Schalldämpfer aufweist, der der Drucksenke vorgeschaltet ist. In diesem Fall kann beispielsweise ein Feststellbremszylinder über ein an der Feststellbremsmodul-Befestigungseinrichtung befestigtes Feststellbremsventilmodul und die Luftaufbereitungsanlage entlüftet werden. Ein derartiger dritter Anschluss kann jedoch insbesondere dann entfallen, wenn ein an der Feststellbremsventilmodul-Befestigungseinrichtung zu befestigendes oder befestigtes Feststellbremsventilmodul oder ein diesem nachgeschalteter Feststellbremszylinder selbst in geeigneter Weise mit einer Drucksenke verbunden werden kann.

Das erfindungsgemäße Feststellbremsventilmodul baut auf dem gattungsgemäßen Stand der Technik dadurch auf, dass dem Gehäuse eine Luftaufbereitungsanlagen-Befestigungseinrichtung zugeordnet ist. Auch dadurch wird erzwungen, dass das Feststellbremsventilmodul und die Luftaufbereitungsanlage unmittelbar benachbart zueinander angeordnet sind, wodurch die zur Verbindung der jeweiligen Anschlüsse erforderlichen Leitungslängen zumindest sehr kurz sind. Vorzugsweise kann auf derartige Verbindungsleitungen jedoch vollständig verzichtet werden, wie dies im Zusammenhang mit der erfindungsgemäßen Luftaufbereitungsanlage bereits erläutert wurde. Auf die entsprechenden Ausführungen wird zur Vermeidung von Wiederholungen verwiesen. Dies gilt sinngemäß auch für die nachfolgend genannten vorteilhaften Weiterbildungen des erfindungsgemäßen Feststellbremsventilmoduls.

Vorzugsweise ist bei dem erfindungsgemäßen Feststellbremsventilmodul vorgesehen, dass zumindest einer der Anschlüsse im Bereich der Luftaufbereitungsanlagen-Befestigungseinrichtung angeordnet ist. Diese Lösung ermöglicht insbesondere eine zumindest weitgehend automatische Verbindung der jeweiligen Anschlüsse, wenn das Feststellbremsventilmodul an einer entsprechend ausgelegten Luftaufbereitungsanlage befestigt wird.

Auch für das erfindungsgemäße Feststellbremsventilmodul wird es als vorteilhaft erachtet, dass die Luftaufbereitungsanlagen-Befestigungseinrichtung einen Flansch umfasst. Hinsichtlich der Definition des Begriffes "Flansch" wird auf die entsprechenden Ausführungen im Zusammenhang mit der erfindungsgemäßen Luftaufbereitungsanlage verwiesen.

Ähnlich wie für die erfindungsgemäße Luftaufbereitungsanlage, wird es auch für das erfindungsgemäße Feststellbremsventil bevorzugt, dass in dem Flansch zumindest ein Luftkanal mit einem freien Ende ausgebildet ist, das einen der Anschlüsse bildet. Dem oder den freien Enden können zumindest teilweise geeignete Dichtungsmittel zugeordnet sein.

Bei bevorzugten Ausführungsformen des erfindungsgemäßen Feststellbremsventilmoduls ist vorgesehen, dass die Anschlüsse einen ersten Anschluss umfassen, der mit einem Feststellbremszylinderanschluss in Verbindung steht. Dieser erste Anschluss kann insbesondere dazu dienen, den in einem an das Feststellbremsventilmodul angeschlossenen Feststellbremszylinder herrschenden Druck zum Zwecke der Sensierung einer Luftaufbereitungsanlage zuzuführen, die mit einem entsprechenden Drucksensor oder Druckschalter ausgestattet ist. Daher steht der erste Anschluss des Feststellbremsventilmoduls vorzugsweise ohne dazwischen geschaltete weitere Komponenten mit dem Feststellbremszylinderanschluss in Verbindung. Durch diese Lösung kann auf eine separate Messleitung vollständig verzichtet werden.

Weiterhin wird es für das erfindungsgemäße Feststellbremsventilmodul als vorteilhaft erachtet, dass die Anschlüsse einen zweiten Anschluss umfassen, der über ein dem Feststellbremsventilmodul zugeordnetes Feststellbremsventil mit einem Feststellbremszylinderanschluss in Verbindung gebracht werden kann, um einen angeschlossenen Feststellbremszylinder mit Druck zu beaufschlagen. Ein derartiger zweiter Anschluss kann besonders vorteilhaft mit einem zweiten Anschluss der erfindungsgemäßen Luftaufbereitungsanlage zusammenwirken, wie er oben erläutert wurde.

Weiterhin kann im Zusammenhang mit dem erfindungsgemäßen Feststellbremsventilmodul vorgesehen sein, dass die Anschlüsse einen dritten Anschluss umfassen, der über ein dem Feststellbremsventilmodul zugeordnetes Feststellbremsventil mit einem Feststellbremszylinderanschluss in Verbindung gebracht werden kann, um einen Feststellbremszylinder zu entlüften. Dieser Lösung ist beispielsweise vorteilhaft, wenn die Entlüftung über einen Schalldämpfer erfolgen soll und dem Feststellbremszylinder beziehungsweise dem Feststellbremsventilmodul kein entsprechender Schalldämpfer zugeordnet ist, die entsprechende Luftaufbereitungsanlage jedoch über einen derartigen Schalldämpfer verfügt.

Gemäß einer bevorzugten Weiterbildung des erfindungsgemäßen Feststellbremsventilmoduls ist vorgesehen, dass es einen Steueranschluss aufweist, über den einem dem Feststellbremsventilmodul zugeordneten Feststellbremsventil zu dessen Ansteuerung Druckluft zugeführt werden kann. Bei dem Feststellbremsventil kann es sich insbesondere um ein Relaisventil mit einem Steuereingang handeln, der dann mit dem Steueranschluss in Verbindung steht. Vorzugsweise ist der Steueranschluss nicht im unmittelbaren Bereich der Luftaufbereitungsanlagen-Befestigungseinrichtung vorgesehen.

Jedes System, das über eine erfindungsgemäße Luftaufbereitungsanlage und ein an dieser befestigtes erfindungsgemäßes Feststellbremsventilmodul verfügt, fällt in den Schutzbereich der zugehörigen Ansprüche. Bei einem derartigen System ergeben sich Wechselwirkungen, die auch die erfindungsgemäße Luftaufbereitungsanlage und/oder das erfindungsgemäße Feststellbremsventilmodul für sich kennzeichnen können, und auch aus derartigen Wechselwirkungen resultierende, für den Fachmann erkennbaren Merkmale sollen für die erfindungsgemäße Luftaufbereitungsanlage und/oder das erfindungsgemäße Feststellbremsventilmodul als offenbart gelten.

Aus dem Vorstehenden ergibt sich, dass die Erfindung zu einem elektronischen Luftaufbereitungssystem führen kann, das ein angeflanschtes Feststellbremsrelaisventil zum Steuern des Druckes in den Feststellbremszylindern einer Nutzfahrzeugbremsanlage aufweist. Der Flansch ist dabei vorzugsweise so ausgeführt, dass er zumindest zwei Verbindungskanäle zwischen dem elektronischen Luftaufbereitungssystem und dem Relaisventil aufnimmt, wobei ein erster Kanal das Relaisventil mit Druckluft versorgt, insbesondere abzweigend nach einem Rückschlagventil des Luftaufbereitungssystems. Ein zweiter Kanal führt vorzugsweise den vom Relaisventil ausgesteuerten und dem Bremszylinder zur Verfügung gestellten Druck über den Flansch einem Drucksensor zu, welcher in der elektronischen Luftaufbereitungsanlage untergebracht ist.

Bevorzugte Ausführungsformen der Erfindung werden nachfolgend anhand der zugehörigen Zeichnungen beispielhaft erläutert.

Es zeigen:
- Figur 1: eine teilweise geschnittene und teilweise in Blockschaltbildform ausgeführte schematische Darstellung einer Ausführungsform der erfindungsgemäßen Luftaufbereitungsanlage;
- Figur 2: eine teilweise geschnittene und teilweise in Blockschaltbildform ausgeführte schematische Darstellung einer Ausführungsform der erfindungsgemäßen Feststellbremsventilmoduls; und
- Figur 3: ein System, bestehend aus der Luftaufbereitungsanlage von Figur 1 und dem Feststellbremsventilmodul von Figur 2, im Zusammenwirken mit weiteren Komponenten einer Nutzfahrzeugbremsanlage.

Gleiche oder ähnliche Bezugszeichen bezeichnen in den Zeichnungen zumindest teilweise gleiche oder ähnliche Komponenten, die zur Vermeidung von Wiederholungen teilweise nur einmal erläutert werden.

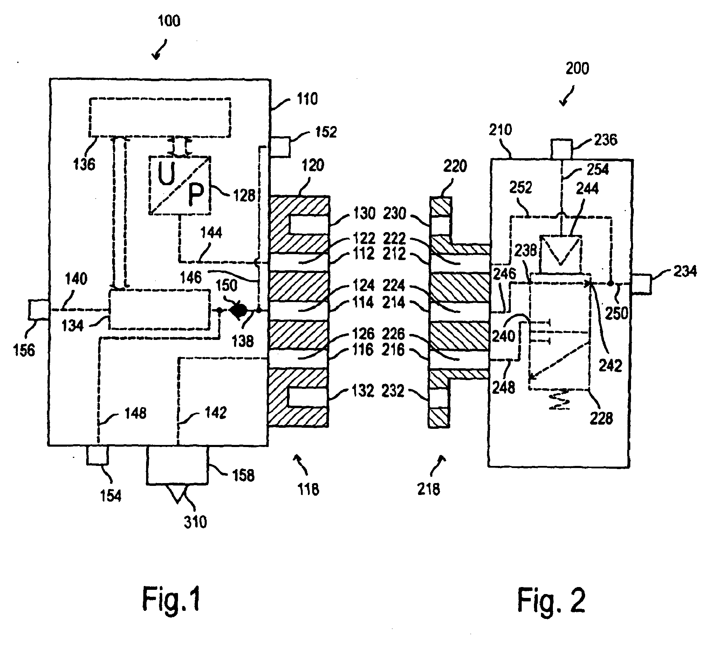

Figur 1 zeigt eine bevorzugte Ausführungsform der erfindungsgemäßen Luftaufbereitungsanlage. Die Darstellung ist dabei so gewählt, dass innerhalb der elektronischen Luftaufbereitungsanlage 100 vorhandene Komponenten, auf die hier Bezug genommen wird, gestrichelt dargestellt sind, während die erfindungsgemäß vorgesehene Feststellbremsventilmodul-Befestigungseinrichtung 118 im Schnitt gezeigt ist.

Die elektronische Luftaufbereitungsanlage 100 weist ein Gehäuse 110 auf, dem eine Feststellbremsventilmodul-Befestigungseinrichtung 118 zugeordnet ist, die durch einen im Schnitt dargestellten Flansch 120 gebildet ist. In dem Flansch 120 sind ein erster Luftkanal 122, ein zweiter Luftkanal 124 und ein dritter Luftkanal 126 durch entsprechende Bohrungen ausgebildet. Das freie Ende des ersten Luftkanals 122 bildet einen ersten Anschluss 112, das freie Ende des zweiten Luftkanals 124 bildet einen zweiten Anschluss 114 und das freie Ende des dritten Luftkanals 126 bildet einen dritten Anschluss 116. Diese Anschlüsse 112, 114, 116 sind dazu vorgesehen, mit korrespondierenden Anschlüssen eines Feststellbremsventilmoduls 200 zusammenzuwirken, wie es später noch näher erläutert wird. Um ein derartiges Feststellbremsventilmodul an dem Flansch 120 befestigen zu können, weist dieser zumindest zwei Gewindebohrungen 130, 132 auf. Aus dem Gehäuse 110 sind weiterhin ein Bedieneinrichtungsanschluss 152, ein Anhängersteuerventilanschluss 154 und ein Druckluftvorratsanschluss 156 herausgeführt. Weiterhin umfasst die elektronische Luftaufbereitungsanlage 100 einen Schalldämpfer 158, der mit einer beispielsweise durch die Umgebung gebildeten Drucksenke 310 in Verbindung steht, so dass Druckluft über den Schalldämpfer 158 beispielsweise in die als Drucksenke 310 dienende Umgebung abgelassen werden kann.

Im Inneren des Gehäuses 110 der elektronischen Luftaufbereitungsanlage 100 ist eine Vielzahl von Komponenten vorgesehen, von denen nur die hier relevanten in gestrichelter Darstellung angedeutet sind. In der Praxis können jedoch beispielsweise sämtliche Komponenten der in der DE 103 41 723 beschriebenen Luftaufbereitungsanlage in dem Gehäuse 110 enthalten sein. In Figur 1 angedeutet sind lediglich eine elektronische Steuereinrichtung 136, ein Drucksensor 128, Ventileinrichtungen 134 und ein Rückschlagventil 150. Der erste Anschluss 112 der Luftaufbereitungsanlage 100 steht über den ersten Luftkanal 122 und einen Leitungsabschnitt 144 mit dem Drucksensor 128 in Verbindung, der seinerseits elektrische Signale mit der elektronischen Steuereinrichtung 136 austauschen kann, wie dies durch den entsprechenden Doppelpfeil angedeutet ist. Der zweite Anschluss 114 der Luftaufbereitungsanlage 100 kann über einen das Rückschlagventil 150 aufweisenden Leitungsabschnitt 138, die Ventileinrichtungen 134 und einen Leitungsabschnitt 140 mit einem Druckluftvorratsanschluss 156 in Verbindung gebracht werden, sofern die elektronische Steuereinrichtung 136 entsprechende elektrische Signale mit die Ventileinrichtungen 134 ausgibt, wie dies durch den entsprechenden Doppelpfeil angedeutet ist. Der dritte Anschluss 116 der Luftaufbereitungsanlage 100 steht über den dritten Luftkanal 126, einen Leitungsabschnitt 142 und den Schalldämpfer 158 mit der Drucksenke 310 in Verbindung. Von dem Leitungsabschnitt 138 zweigt, bezogen auf die mögliche Strömungsrichtung vor dem Rückschlagventil 150, ein Leitungsabschnitt 148 ab, der zu dem Anhängersteuerventilanschluss 154 führt. Weiterhin zweigt von dem Leitungsabschnitt 138, bezogen auf die mögliche Strömungsrichtung hinter dem Rückschlagventil 150, ein Leitungsabschnitt 146 ab, der zu dem Bedieneinrichtungsanschluss 152 führt.

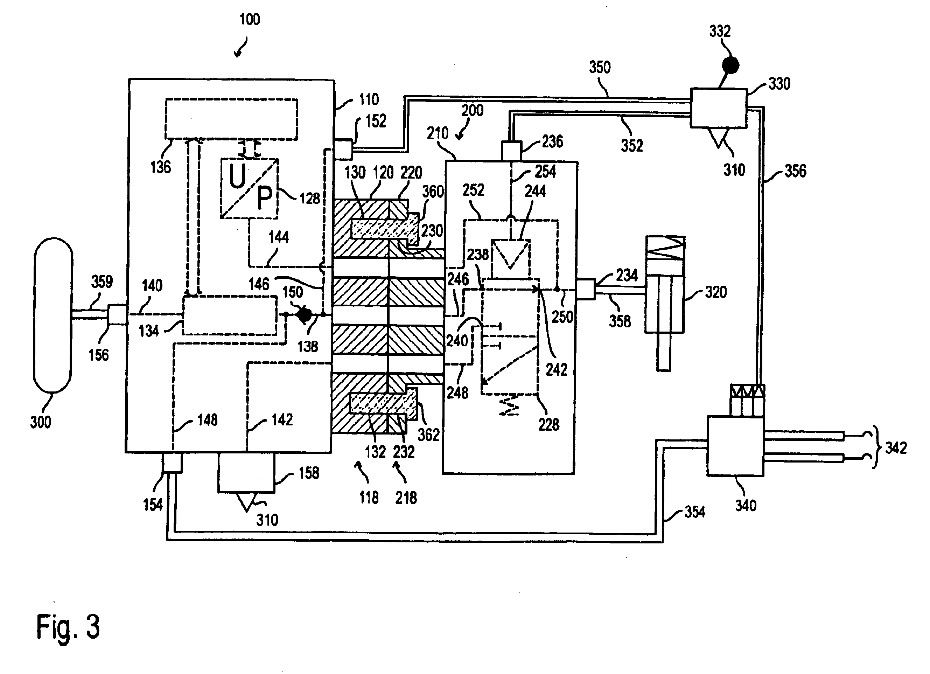

Die im vorliegenden Fall interessierende Funktionsweise der elektronischen Luftaufbereitungsanlage 100 wird später anhand von Figur 3 noch näher erläutert.

Figur 2 zeigt eine bevorzugte Ausführungsform des erfindungsgemäßen Feststellbremsventilmoduls 200, das ein Gehäuse 210 aufweist, dem eine Luftaufbereitungsanlagen-Befestigungseinrichtung 218 zugeordnet ist. Die Darstellung ist dabei so gewählt, dass innerhalb des Gehäuses 210 enthaltene Komponenten, auf die hier Bezug genommen wird, gestrichelt dargestellt sind, während die Luftaufbereitungsanlagen-Befestigungseinrichtung 218 im Schnitt dargestellt ist.

Die Luftaufbereitungsanlagen-Befestigungseinrichtung 218 ist durch einen Flansch 220 gebildet. In dem Flansch 220 sind ein erster Luftkanal 222, ein zweiter Luftkanal 224 und ein dritter Luftkanal 226 durch entsprechende Bohrungen gebildet. Das freie Ende des ersten Luftkanals 222 bildet einen ersten Anschluss 212, das freie Ende des zweiten Luftkanals 224 bildet einen zweiten Anschluss 214 und das freie Ende des dritten Luftkanals 226 bildet einen dritten Anschluss 216. Aus dem Gehäuse 210 sind weiterhin ein Feststellbremszylinderanschluss 234 und ein Steueranschluss 236 herausgeführt. Das Feststellbremsventilmodul 200 ist dazu vorgesehen, mit einer erfindungsgemäßen Luftaufbereitungsanlage zusammenzuwirken, wie dies später noch näher erläutert wird. Um das Feststellbremsventilmodul 200 mit einer Luftaufbereitungsanlage verbinden zu können, sind im Randbereich des Flansches 220 zwei Bohrungen 230, 232 vorgesehen.

Im Inneren des Gehäuses 210 ist ein Feststellbremsventil 228 vorgesehen, bei dem es sich um ein 3/2-Relaisventil handelt. Das Feststellbremsventil 228 weist einen ersten Ventilanschluss 238, einen zweiten Ventilanschluss 240 und einen dritten Ventilanschluss 242 auf. Weiterhin weist das Feststellbremsventil 228 einen Steuereingang 244 auf, der mit einem Steuerdruck beaufschlagt werden kann, um das Feststellbremsventil 228 in seine Arbeitsstellung zu bringen. In der dargestellten, durch einen entsprechenden Druck am Steuereingang 244 hervorgerufenen Arbeitsstellung verbindet das Feststellbremsventil 228 den ersten Ventilanschluss 238 mit dem dritten Ventilanschluss 242. Gleichzeitig sperrt es den zweiten Ventilanschluss 240 ab. Bei einem fehlenden oder entsprechend niedrigen Druck am Steuereingang 242 nimmt das Feststellbremsventil 228 eine durch zumindest eine Vorspannfeder erzwungene, nicht dargestellte Ruhestellung ein. In dieser Ruhestellung sperrt das Feststellbremsventil 228 den ersten Ventilanschluss 238 ab. Weiterhin verbindet es den zweiten Ventilanschluss 240 und den dritten Ventilanschluss 242. Der erste Anschluss 212 steht über den ersten Luftkanal 222, einen Leitungsabschnitt 252 und einen Leitungsabschnitt 250 mit dem Feststellbremszylinderanschluss 234 in Verbindung. Der zweite Anschluss 214 steht über den zweiten Luftkanal 224 sowie einen Leitungsabschnitt 246 mit dem ersten Ventilanschluss 238 in Verbindung. Der dritte Anschluss 216 steht über den dritten Luftkanal 226 sowie einen Leitungsabschnitt 248 mit dem zweiten Ventilanschluss 240 in Verbindung. Weiterhin steht der dritte Ventilanschluss 242 mit dem Feststellbremszylinderanschluss 234 über einen Leitungsabschnitt 250 in Verbindung, von dem der Leitungsabschnitt 242 abzweigt. Der Steuereingang 244 des Feststellbremsventils 228 steht über einen Leitungsabschnitt 254 mit dem Steueranschluss 236 in Verbindung.

Die Funktionsweise des in Figur 2 dargstellten Feststellbremsventilmoduls 200 wird nachfolgend anhand von Figur 3 näher erläutert.

Figur 3 zeigt ein System, bestehend aus der Luftaufbereitungsanlage 100 von Figur 1 und dem Feststellbremsventilmodul 200 von Figur 2, im Zusammenwirken mit weiteren Komponenten einer Nutzfahrzeugbremsanlage. Gemäß der Darstellung von Figur 3 sind die elektronische Luftaufbereitungsanlage 100 und das Feststellbremsventilmodul 200 über die Flansche 120 und 220 aneinander befestigt. Zu diesem Zweck sind Schrauben 360, 362 durch die Bohrungen 230 und 232 geführt und in den Gewindebohrungen 130 und 132 verschraubt. Die Bezugszeichen 112, 114, 116, 212, 214 und 216 für die ersten bis dritten Anschlüsse der Luftaufbereitungsanlage 100 und des Feststellbremsventilmoduls 300 sind in Figur 3 aus Platzgründen weggelassen. Gleiches gilt für die Bezugszeichen 122, 124, 126, 222, 224 und 226 für die ersten bis dritten Luftkanäle der Luftaufbereitungsanlage 100 und des Feststellbremsventilmoduls 200. Es ist jedoch zu erkennen, dass die beiden ersten, die beiden zweiten und die beiden dritten Anschlüsse ohne die Verwendung von zusätzlichen Leitungen automatisch in Verbindung gebracht werden, wenn die Luftaufbereitungsanlage 100 und das Feststellbremsventilmodul 200 miteinander verbunden werden. Zur Abdichtung können zwischen den Flanschen 120 und 220 gegebenenfalls nicht dargestellte Dichtungseinrichtungen vorgesehen sein, die separat ausgebildet oder dem Flansch 120 und/oder dem Flansch 220 zugeordnet sein können.

Neben den bereits anhand der Figuren 1 und 2 erläuterten Komponenten sind in Figur 3 weiterhin ein Druckluftvorrat 300, ein Feststellbremszylinder 320, eine Bedieneinrichtung 330 und ein Anhängersteuerventil 340 angedeutet. Der Druckluftvorrat 300 steht über eine Leitung 359 mit dem Druckluftvorratsanschluss 156 in Verbindung, um dem dargestellten System Druckluft zuzuführen. Die Bedieneinrichtung 330 steht über eine Leitung 350 mit dem Bedieneinrichtungsanschluss 152, über eine Leitung 352 mit dem Steueranschluss 236 und über eine Leitung 356 mit dem Anhängersteuerventil 340 in Verbindung. Bei den Leitungen 350, 352 und 356 handelt es sich um Leitungen, mit denen lediglich Steuerdrücke weitergeleitet werden, weshalb diese Leitungen 350, 352 und 356 einen deutlich kleineren Querschnitt aufweisen können als beispielsweise die Versorgungsleitung 354, die das Anhängersteuerventil 340 mit dem Anhängersteuerventilanschluss 154 verbindet, oder die Leitung 358, die den Feststellbremszylinderanschluss 234 mit dem Feststellbremszylinder 320 verbindet. Die Bedieneinrichtung 330 weist im dargestellten Fall einen vom Fahrer betätigbaren Hebel 332 auf und ist im Führerhaus des Nutzfahrzeugs angeordnet. Daher ist es sehr vorteilhaft, dass die zu der Bedieneinrichtung 330 führenden Leitungen 350, 352 und 356 Leitungen mit kleinem Querschnitt sein können, die sowohl in der Herstellung als auch in der Verlegung kostengünstig sind.

Nachfolgend wird auf die hier relevante Funktion der in Figur 3 dargestellten Komponenten näher eingegangen. In der dargestellten Stellung des Hebels 332 verbindet die Bedieneinrichtung 330 die Leitung 350 mit der Leitung 352 und der Leitung 356. Dadurch wird der Steuereingang 244 des Feststellbremsventils 228 mit Druck beaufschlagt und das Feststellbremsventil 228 nimmt die dargestellte Arbeitsstellung ein. In dieser Stellung wird der Feststellbremszylinder 320, bei dem es sich um einen Federspeicherzylinder handelt, über das Feststellbremsventil 228, die Flansche 120, 220, das Rückschlagventil 150 und die Ventileinrichtungen 134 mit Druck beaufschlagt, um die Feststellbremse zu lösen. Dem Fachmann ist klar, dass gegebenenfalls mehrere hinsichtlich der Druckluftzu- und -abfuhr parallel geschaltete Feststellbremszylinder vorgesehen sein können. Der dem Feststellbremsventil 228 über die Leitung 352 zugeführte Steuerdruck wird auch dem Anhängersteuerventil 340 zugeführt, über die Leitung 356, so dass an den Anhängeranschlüssen 342 zum Lösen der Feststellbremse eines nicht dargestellten Anhängers geeignete Drücke erzeugt werden können.

Bewegt der Fahrer den Hebel 332 in die andere, nicht dargestellte Position, so wird die Leitung 350 durch die Bedieneinrichtung 330 verschlossen und die Leitungen 352, 356 werden mit der Drucksenke 310 verbunden. Dadurch bewegt sich das Feststellbremsventil 228 in seine nicht dargestellte Ruhestellung, in der der Feststellbremszylinder 320 über das Feststellbremsventil 228, die Flansche 120, 220, den Schalldämpfer 158 und die entsprechenden Leitungsabschnitte mit der Drucksenke 310 verbunden ist, um den Feststellbremszylinder 320 zu entlüften und somit die Feststellbremse anzulegen. Aufgrund der drucklosen Leitung 356 erzeugt das Anhängersteuerventil 340 an den Anhängeranschlüssen 342 Drücke, die zum anlegen der Feststellbremse eines nicht dargestellten Anhängers führen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 100: elektronische Luftaufbereitungsanlage
- 110: Gehäuse der Luftaufbereitungsanlage
- 112: erster Anschluss der Luftaufbereitungsanlage
- 114: zweiter Anschluss der Luftaufbereitungsanlage
- 116: dritter Anschluss der Luftaufbereitungsanlage
- 118: Feststellbremsventilmodul-Befestigungseinrichtung
- 120: Flansch der Luftaufbereitungsanlage
- 122: erster Luftkanal der Luftaufbereitungsanlage
- 124: zweiter Luftkanal der Luftaufbereitungsanlage
- 126: dritter Luftkanal der Luftaufbereitungsanlage
- 128: Drucksensor
- 130: erste Gewindebohrung
- 132: zweite Gewindebohrung
- 134: Ventileinrichtungen
- 136: elektronische Steuereinrichtung
- 138: Leitungsabschnitt
- 140: Leitungsabschnitt
- 142: Leitungsabschnitt
- 144: Leitungsabschnitt
- 146: Leitungsabschnitt
- 148: Leitungsabschnitt
- 150: Rückschlagventil
- 152: Bedieneinrichtungsanschluss
- 154: Anhängersteuerventilanschluss
- 156: Druckluftvorratsanschluss
- 158: Schalldämpfer
- 200: Feststellbremsventilmodul
- 210: Gehäuse des Feststellbremsventilmoduls
- 212: erster Anschluss des Feststellbremsventilmoduls
- 214: zweiter Anschluss des Feststellbremsventilmoduls
- 216: dritter Anschluss des Feststellbremsventilmoduls
- 218: Luftaufbereitungsanlagen-Befestigungseinrichtung
- 220: Flansch des Feststellbremsventilmoduls
- 222: erster Luftkanal des Feststellbremsventilmoduls
- 224: zweiter Luftkanal des Feststellbremsventilmoduls
- 226: dritter Luftkanal des Feststellbremsventilmoduls
- 228: Feststellbremsventil
- 230: erste Bohrung
- 232: zweite Bohrung
- 234: Feststellbremszylinderanschluss
- 236: Steueranschluss
- 238: erster Ventilanschluss
- 240: zweiter Ventilanschluss
- 242: dritter Ventilanschluss
- 244: Steuereingang
- 246: Leitungsabschnitt
- 248: Leitungsabschnitt
- 250: Leitungsabschnitt
- 252: Leitungsabschnitt
- 254: Leitungsabschnitt
- 300: Druckluftvorrat
- 310: Drucksenke
- 320: Feststellbremszylinder
- 330: Bedieneinrichtung
- 332: Handhebel
- 340: Anhängersteuerventil
- 342: Anhängeranschlüsse
- 350: Leitung
- 352: Leitung
- 354: Leitung
- 356: Leitung
- 358: Leitung
- 359: Leitung
- 360: Schraube
- 362: Schraube

## Patentansprüche

1. System, umfassend eine Luftaufbereitungsanlage (100) zum Versorgen einer Nutzfahrzeugbremsanlage mit Druckluft und ein an dieser befestigtes Feststellbremsventilmodul (200) zum Beaufschlagen zumindest eines Feststellbremszylinders (312) einer Nutzfahrzeugbremsanlage mit Druckluft,
wobei die Luftaufbereitungsanlage (100) ein erstes Gehäuse (110) mit Anschlüssen (112, 114, 116) aufweist, die dazu vorgesehen sind, mit dem Feststellbremsventilmodul (200) verbunden zu werden,
und wobei das Feststellbremsventilmodul (200) ein zweites Gehäuse (210) mit Anschlüssen (212, 214, 216) aufweist, die dazu vorgesehen sind, mit der Luftaufbereitungsanlage (100) verbunden zu werden, wobei dem ersten Gehäuse (110) eine Feststellbremsventilmodul-Befestigungseinrichtung (118) zugeordnet ist,
und dass die pneumatischen Anschlüsse (112, 114, 116) im Bereich der Feststellbremsventilmodul-Befestigungseinrichtung (118) angeordnet sind, wobei dem zweiten Gehäuse (210) eine Luftaufbereitungsanlagen-Befestigungseinrichtung (218) zugeordnet ist, und dass die pneumatischen Anschlüsse (212, 214, 216) im Bereich der Luftaufbereitungsanlagen-Befestigungseinrichtung (218) angeordnet sind,
wobei die Befestigung über die Feststellbremsventilmodul-Befestigungseinrichtung (118) und die Luftaufbereitungsanlagen-Befestigungseinrichtung (218) vorgenommen ist, **dadurch gekennzeichnet, dass** die Feststellbremsventilmodul-Befestigungseinrichtung (118) durch einen ersten Flansch (120) gebildet ist, und dass die Luftaufbereitungsanlagen-Befestigungseinrichtung (218) durch einen zweiten Flansch (220) gebildet ist,
und dass in dem ersten Flansch (120) Luftkanäle (122, 124, 126) mit einem freien Ende ausgebildet sind, das jeweils einen der Anschlüsse (112, 114, 116) bildet, und dass in dem zweiten Flansch (220) Luftkanäle (222, 224, 226) mit einem freien Ende ausgebildet sind, das jeweils einen der Anschlüsse (212, 214, 216) bildet,
wobei ein erster Kanal (124, 224) ein Relaisventil (228) mit Druckluft versorgt und ein zweiter Kanal (122, 222) den vom Relaisventil (228) angesteuerten und einem Bremszylinder (320) zur Verfügung gestellten Druck über die Flansche (120, 220) einem Drucksensor (128) zuführt, welcher in der elektronischen Luftaufbereitungsanlage (100) untergebracht ist.

2. System nach einem der vorhergehenden Ansprüche,
**dadurch gekennzeichnet, dass** die Anschlüsse (112, 114, 116) der Luftaufbereitungsanlage (100) einen ersten Anschluss (112) umfassen, der mit einem in dem ersten Gehäuse (110) untergebrachten Drucksensor (128) in Verbindung steht, und dass die Anschlüsse (212, 214, 216) des Feststellbremsventilmoduls (200) einen ersten Anschluss (212) umfassen, der mit einem Feststellbremszylinderanschluss (230) in Verbindung steht.

3. System nach einem der vorhergehenden Ansprüche,
**dadurch gekennzeichnet, dass** die Anschlüsse (112, 114, 116) der Luftaufbereitungsanlage (100) einen zweiten Anschluss (114) umfassen, der über die elektronische Luftaufbereitungsanlage (100) mit einem Druckluftvorrat (300) in Verbindung gebracht werden kann, und dass die Anschlüsse (212, 214, 216) des Feststellbremsventilmoduls (200) einen zweiten Anschluss (214) umfassen, der über ein dem Feststellbremsventilmodul (200) angeordnetes Feststellbremsventil (228) mit einem Feststellbremszylinderanschluss (234) in Verbindung gebracht werden kann, um den Feststellbremszylinder (320) mit Druck zu beaufschlagen.

4. System nach einem der vorhergehenden Ansprüche,
**dadurch gekennzeichnet, dass** die Anschlüsse (112, 114, 116) der Luftaufbereitungsanlage (100) einen dritten Anschluss (116) umfassen, der über die elektronische Luftaufbereitungsanlage (100) mit einer Drucksenke (310) in Verbindung gebracht werden kann, und dass die Anschlüsse (212, 214, 216) des Feststellbremsventilmoduls (200) einen dritten Anschluss (216) umfassen, der über ein dem Feststellbremsventilmoduls (200) zugeordnetes Feststellbremsventil (228) mit einem Feststellbremszylinderanschluss (234) in Verbindung gebracht werden kann, um einen Feststellbremszylinder (320) zu entlüften.

5. System nach einem der Ansprüche 1 bis 4,
**dadurch gekennzeichnet, dass** es einen Steueranschluss (236) aufweist, über den einem dem Feststellbremsventilmodul (200) zugeordneten Feststellbremsventils (228) zu dessen Ansteuerung Druckluft zugeführt werden kann.

## Claims

1. System comprising an air processing system (100) for supplying a utility vehicle brake system with compressed air and a parking brake valve module (200) connected thereto for applying compressed air on at least one parking brake actuator (312) of a utility vehicle brake system,
with said air processing system (100) comprising a first housing (110) with connectors (112, 114, 116) which are provided for being connected to said parking brake valve module (200),
and with said parking brake valve module (200) comprising a second housing (210) with connectors (212, 214, 216) which are provided for being connected to said air processing system (100),
wherein a parking brake valve module fastening means (118) is associated with said first housing (110),
and wherein said pneumatic connectors (112, 114, 116) are disposed in the region of said parking brake valve module fastening means (118) and wherein an air processing system fastening means is associated with said second housing (210), and
wherein said pneumatic connectors (212, 214, 216) are disposed in the region of said air processing system fastening means (218),
with fastening being made through said parking brake valve module fastening means (118) and said air processing system fastening means (218), **characterised in**
**that** said parking brake valve module fastening means (118) is constituted by a second flange (220),
and **that** air passages (122, 124, 126) are formed in said first flange (120) with a free end that constitutes a respective one of said connectors (112, 114, 116), and that air passages (222, 224, 226) are formed in said second flange (220) with a free end that constitutes a respective one of said connectors (212, 214, 216),
wherein a first passage (124, 224) supplies a relay valve with compressed air and wherein a second passage (122, 222) supplies the pressure, which is controlled by said relay valve (228) and provided by a brake actuator (320), via said flanges (120, 220) to a pressure sensor (128) that is accommodated in said electronic air processing system (100).

2. System according any of the preceding Claims, **characterised in that** said connectors (112, 114, 116) of said air processing system include a first connector (112) that communicates with a pressure sensor (128) accommodated in said first housing, and that said connectors (212, 214, 216) of said parking brake valve module (200) include a first connector (212) that communicates with a parking brake actuator connector (230).

3. System according to any of the preceding Claims, **characterised in that** said connectors (112, 114, 116) of said air processing system (100) include a second connector (114) that is adapted to be communicated via said electronic air processing system (100) to a compressed-air reservoir (300), and that said connectors (212, 214, 216) of said parking brake valve module (200) include a second connector (214) that is adapted to be communicated via parking brake valve (228) disposed above said parking brake valve module (200) to a parking brake actuator connector (234) for applying pressure on said parking brake actuator (320).

4. System according to any of the preceding Claims, **characterised in that** said connectors (112, 114, 116) of said air processing system (100) include a third connector (116) that is adapted to be communicated via said electronic air processing system (100) to a pressure sink (310), and that said connectors (212, 214, 216) of said parking brake valve module (200) include a third connector (216) that is adapted to be communicated via a parking brake valve (228) associated with said parking brake valve module (200) to a parking brake actuator connector (234) for bleeding a parking brake actuator (320).

5. System according to any of the Claims 1 to 4, **characterised in that** it comprises a control connector (236) via which compressed air is supplied to a parking brake valve (228) associated with said parking brake valve module (200) for controlling the valve.

## Revendications

1. Système comprenant un système (100) de traitement de l'air pour l'alimentation d'un système de freinage de véhicule utilitaire en air comprimé et un module (200) de vanne de frein de stationnement, qui y est fixé, pour l'alimentation d'au moins un cylindre (312) de frein de stationnement d'un système de frein de véhicule utilitaire en air comprimé,
dans lequel le système (100) de traitement de l'air a une première enveloppe (110) ayant des raccords (112, 114, 116) qui sont prévus pour être reliés au module (200) de vanne de frein de stationnement,
et dans lequel le module (200) de vanne de frein de stationnement a une deuxième enveloppe (210) ayant des raccords (212, 214, 216) qui sont prévus pour être reliés au système (100) de traitement de l'air, dans lequel
un dispositif (118) de fixation de module de vanne de frein de stationnement est associé à la première enveloppe (110),
et en ce que les raccords (112, 114, 116) pneumatiques sont disposés dans la zone du dispositif (118) de fixation du module de vanne de frein de stationnement,
dans lequel un dispositif (218) de fixation du système de traitement de l'air est associé à la deuxième enveloppe (210) et en ce que les raccords (212, 214, 216) pneumatiques sont disposés dans la zone du dispositif (218) de fixation du système de traitement de l'air,
dans lequel la fixation est effectuée par le dispositif (118) de fixation du module de vanne de frein de stationnement et par le dispositif (218) de fixation du système de traitement de l'air, **caractérisé**
**en ce que** le dispositif (118) de fixation du module de vanne de frein de stationnement est formé par une première bride (120)
et **en ce que** le dispositif (218) de fixation du système de traitement de l'air est formé par une deuxième bride (220),
et **en ce que** le dispositif (218) de fixation du système de traitement de l'air est formé par une deuxième bride (220),
et **en ce qu'**il est formé dans la première bride (120) des canaux (122, 124, 128) pour de l'air ayant une extrémité libre qui forme respectivement l'un des raccords (112, 114, 116), et en ce qu'il est formé dans la deuxième bride (220) des canaux (222, 224, 226) pour de l'air ayant une extrémité libre qui forme respectivement l'un des raccords (212, 214, 216),
dans lequel un premier canal (124, 224) alimente une vanne (228) relais en air comprimé et un deuxième canal (122, 222) applique par l'intermédiaire de la bride (120, 220) à un capteur (128) de pression, qui est logé dans le système (100) électronique de traitement de l'air, la pression réglée par la vanne (228) relais et mise à disposition d'un cylindre (320) de frein.

2. Système suivant l'une des revendications précédentes, **caractérisé en ce que** les raccords (112, 114, 116) du système (100) de traitement de l'air comprennent un premier raccord (112) qui est en liaison avec un capteur (128) de pression logé dans la première enveloppe (110) et **en ce que** les raccords (212, 214, 216) du module (200) de vanne de frein de stationnement comprennent un premier raccord (212), qui est en liaison avec un raccord (230) de cylindre de frein de stationnement.

3. Système suivant l'une des revendications précédentes, **caractérisé en ce que** les raccords (112, 114, 116) du système (100) de traitement de l'air comprennent un deuxième raccord (114), qui peut être mis en liaison avec un réservoir (300) d'air comprimé par le système (100) électronique de traitement de l'air et **en ce que** les raccords (212, 214, 216) du module (200) de vanne de frein de stationnement comprennent un deuxième raccord (214), qui peut être mis en liaison avec un raccord (234) de cylindre de frein de stationnement par une vanne (228) de frein de stationnement disposée dans le module (200) de vanne de frein de stationnement, afin de mettre le cylindre (320) de frein de stationnement en pression.

4. Système suivant l'une des revendications précédentes, **caractérisé en ce que** les raccords (112, 114, 116) du système (100) de traitement de l'air comprennent un troisième raccord (116), qui peut être mis en liaison avec un puits (310) de pression par le système (100) électronique de traitement de l'air et **en ce que** les raccords (212, 214, 216) du module (200) de vanne de frein de stationnement comprennent un troisième raccord (216), qui peut être mis en liaison avec un raccord (234) de cylindre de frein de stationnement par une vanne (228) de frein de stationnement associée au module (200) de vanne de frein de stationnement, afin de mettre à l'atmosphère le cylindre (320) de frein de stationnement.

5. Système suivant l'une des revendications 1 à 4, **caractérisé en ce qu'**il a un raccord (236) de commande, par lequel de l'air comprimé peut être envoyé pour sa commande à une vanne (228) de frein de stationnement associé au module (200) de vanne de frein de stationnement.
